# EUROPEAN PATENT SPECIFICATION

(11) **EP 4 345 420 B1**
(45) Date of publication and mention of the grant of the patent: **06.08.2025**
(21) Application number: 23196188.9
(22) Date of filing: 08.09.2023
(51) Int. Cl.: G01C 23/00, G08G 5/00

(54) **SYSTEMS AND METHODS FOR HIGH INTEGRITY DOMAIN-SPECIFIC DATA BROKER ENGINE IN VEHICLE DATA GATEWAY**
SYSTEME UND VERFAHREN FÜR DOMÄNENSPEZIFISCHE DATENMAKLERMASCHINE MIT HOHER INTEGRITÄT IN EINEM FAHRZEUGDATENGATEWAY
SYSTÈMES ET PROCÉDÉS POUR MOTEUR DE COURTIER DE DONNÉES SPÉCIFIQUES À UN DOMAINE D'INTÉGRITÉ ÉLEVÉE DANS UNE PASSERELLE DE DONNÉES DE VÉHICULE

(30) Priority: 29.09.2022 IN 202211055953; 15.11.2022 US 202218055570
(43) Date of publication of application: 03.04.2024
(73) Proprietor: Honeywell International Inc., Charlotte, NC 28202 (US)
(72) Inventor: SAHOO, Subhransu, Charlotte 28202 (US); KHAN, Kalimulla, Charlotte 28202 (US); SHAMASUNDAR, Raghu, Charlotte 28202 (US); J, Kirupakar, Charlotte 28202 (US); PORTER, Alexander, Charlotte 28202 (US); RAO, Nayyar Azam Khan, Charlotte 28202 (US)
(74) Representative: Haseltine Lake Kempner LLP

(56) References cited:
- EP-A1- 3 232 639
- US-A1- 2021 183 360

## Description

### TECHNICAL FIELD

Various embodiments of the present disclosure relate generally to a system to filter a data transfer between an external application and a component of a vehicle.

### BACKGROUND

An aircraft data gateway enables two-way communication between external applications and on-board cockpit avionics. In the connected environment, the aircraft data gateway is used for real-time updates to mission parameters from external applications and/or services such as Electronic Flight Bag (EFB), Open World Computer (OWC), a Cloud application, and Airline Operational Control (AOC), for example, to improve the operational efficiency and safety of routine flight operations. The mission parameters may include information such as flight plan modifications, speed and/or altitude profile changes, wind and/or temperature information, cost index, or time constraints, for example. With an increase in data being sent to avionics from non-certified applications from EFB, OWC, and Cloud, there is a risk of data causing an inadvertent effect to the flight mission.

The present disclosure is directed to overcoming one or more of these above-referenced challenges.

EP3232639 A1 relates generally to cyber-security, and, more specifically, to methods and systems for use in identifying cyber-security threats to aviation platforms and infrastructures.

US2021/183360 A1 relates to aircraft systems, and specifically to automated communication with air traffic control operators (e.g. an air traffic controller) in an air traffic control system.

### SUMMARY OF THE DISCLOSURE

In some aspects, the techniques described herein relate to a system to filter a data transfer between an external application and a component of a vehicle, as defined in claim 1.

In some aspects, the techniques described herein relate to a controller-implemented method to filter a data transfer between an external application and a component of a vehicle, as defined in claim 8.

In some aspects, the techniques described herein relate to a non-transitory computer readable medium storing instructions that, when executed by one or more processors, cause the one or more processors to perform the method according to claim 8.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a data adapter in a gateway as a system to transfer data between an external application and a component of a vehicle, according to one or more embodiments.
FIG. 2 depicts a detailed view of the failsafe validation engine of the data adapter in the gateway of FIG. 1, according to one or more embodiments.
FIG. 3 depicts an implementation of a controller that may execute techniques presented herein, according to one or more embodiments.
FIGS. 4-5 depict a flowchart of a method to transfer data between an external application and a component of a vehicle, according to one or more embodiments.

### DETAILED DESCRIPTION OF EMBODIMENTS

Various embodiments of the present disclosure relate generally to a system to filter a data transfer between an external application and a component of a vehicle.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

A vehicle as described below is an aircraft, and a component of the vehicle is an avionics component.

An aircraft data gateway enables two-way communication between an external application and on-board cockpit avionics. In the connected environment, the aircraft data gateway is used for real-time updates to mission parameters from external applications and/or services such as Electronic Flight Bag (EFB), Open World Computer (OWC), a Cloud application, Aeronautical Radio Facilities and Parts Provisioning System (APPS), and Airline Operational Control (AOC), for example, to improve the operational efficiency and safety of routine flight operations. The mission parameters may include information such as flight plan modifications, speed and/or altitude profile changes, wind and/or temperature information, cost index, or time constraints, for example.

With an increase in data being sent to avionics from non-certified applications from EFB, OWC, and Cloud, there is a risk of data causing an inadvertent effect to the flight mission. Although cybersecurity algorithms in gateways may protect the avionics from malicious and unauthorized data, the algorithms do not perform a contextual integrity check to prevent data that may appear valid from causing harm to the avionics.

The disclosed systems and methods may provide a high integrity domain-specific data broker engine to filter requests from external applications based on the mission or context of the flight. This engine acts as a fail-safe mechanism for avionics to pre-process the data received from the external applications. Data requests not intended for the flight in the current context are eliminated at the gateway level and are not passed to the avionics. The disclosed systems and methods may ensure that only relevant data is sent to avionics. The disclosed systems and methods may be implemented in a gateway and enable high integrity data transfers between external applications and avionics.

The disclosed systems and methods may be a failsafe validation engine that is hosted in a gateway. The failsafe validation engine may include a rule base and domain-specific computational logic for validating all data uploads to a line-replaceable unit (LRU) in the avionics. The failsafe validation engine acts as a filter mechanism to eliminate unintended or inconsequential data uploads from external applications and/or services to the avionics. For example, for a flight level change request from an Electronic Flight Bag, the failsafe validation engine may validate the requested flight level against the maximum altitude that the aircraft can fly based on the current configuration. The maximum altitude may be obtained from the avionics, and when the requested flight level from the Electronic Flight Bag is greater than the obtained maximum altitude, the request may be rejected by the failsafe validation engine. When the requested flight level is less than the maximum altitude, the requested flight level may be uploaded to the avionics. Additionally, the failsafe validation engine may check the fuel or time saved due to the requested flight level. If the savings is not significant, such as below a threshold savings value, the failsafe validation engine may reject the requested flight level.

The failsafe validation engine includes a rule engine, a schematic parser, and a context analyzer.

The rule engine receives updated rules from the context analyzer. For example, when the context analyzer determines that the current flight phase is cruise, the updated rules may be to reject an incoming takeoff performance message, and accept an incoming landing performance message. Based on the updated rules, the rule engine processes input data, such as a takeoff performance message or a landing performance message, for example. Upon successful processing, the processed data is
sent to the schematic parser. For example, processed data in may be the landing performance message after the message has been successfully validated by the rule engine, and successful processing may be for any landing performance message when the flight phase is cruise. Only after each of the rules applicable for the landing performance message are satisfied will the processing become successful. Upon unsuccessful processing, the rule engine may send an error message in a notification. For example, unsuccessful processing may be the rule engine rejecting a takeoff performance message during cruise. As an Example, the error message may be "takeoff performance cannot be modified during the flight."

The schematic parser receives the processed data from the rule engine upon successful processing by the rule engine. The schematic parser processes and parses parse the data based on one or more schematics defined for the avionics. For example, a schematic may refer to an object model. For a landing performance message, for example, the message may be parsed to obtain approach speed, flap speed, and descent speed, and successful processing may refer to all the required landing performance data and format being obtained after parsing. Upon successful processing, the schematic parser may send the parsed data to an output process to encode the parsed data to send to respective LRUs. For example, encoding may refer to formatting the input data as prescribed by the respective LRU. For example, an LRU may have following format: "word1: msg id / word2: flap1 speed / word3: flap2 speed / word4: approach speed". Upon unsuccessful processing, the schematic parser may send an error message in a notification.

The context analyzer may receive mission and external context data from an LRU Broadcaster and an external data database, respectively. For example, the mission and external context data may be flight phase and flight level directly obtained from an LRU. For example, the external data may include flight information region, weather, and traffic. For example, the external database may be a repository of all the external context data received from multiple sources. For example, weather information may be received from multiple weather sources globally and stored in the external database. The context analyzer may process the mission data and external context data, and send updated rules to the rule engine based on the processed mission data and external context data.

As an example, a takeoff performance message may be sent to the aircraft during a climbing phase of a flight. Here, the EFB may send the takeoff performance message to the gateway with a request to update the avionics. The input processor may receive the message and decode the data into a data model to process the data. The input processor may send the data model to the failsafe validation engine. The context analyzer may update the mission data (the phase of the flight) rule engine of the failsafe validation engine. When the rule engine processes the data model from the input processor, the failsafe validation engine may reject the request from the EFB, and provide a notification that the takeoff performance message is out of context.

As another example, a route modification flight plan may be sent to the aircraft during a cruise phase of a flight. Here, the EFB may send the route modification flight plan message to gateway with a request to update the avionics. The input processor may receive the message and decode the data into a data model to process the data. The input processor may send the data model to the failsafe validation engine. The context analyzer may update the mission data (such as origin/destination, phase of flight, flight level, for example) of the failsafe validation engine. When the rule engine processes the data model from the input processor, the failsafe validation engine may process the request successfully and send the processed request to the schematic parser. The schematic parser may parse the processed data based on one or more schematics for the avionics, and upon successful parsing, may send the parsed data to the output processor. The output processor may encode the parsed data into a suitable format for the avionics and send to a respective LRU for processing.

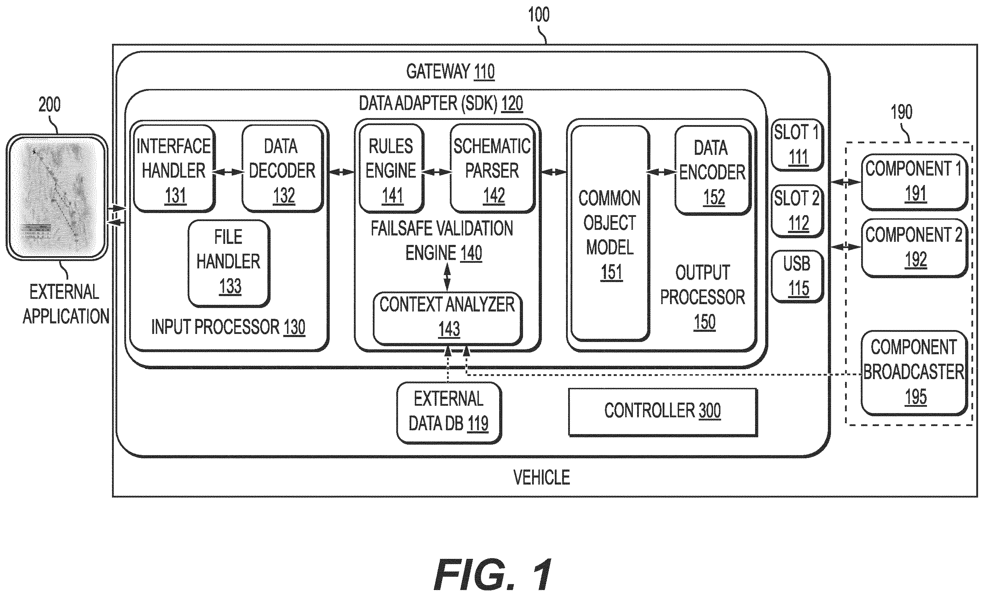

FIG. 1 depicts an exemplary system infrastructure for a data adapter in a gateway to transfer data between an external application and a component of a vehicle, according to one or more embodiments.

As shown in FIG. 1, vehicle 100 may include gateway 110 and components 190. When vehicle 100 is an aircraft, for example, components 190 may be avionics of the aircraft. Gateway 110 may provide bidirectional data transfer between external application 200 and components 190. The vehicle 100 is an aircraft, and the external application 200 is an Electronic Flight Bag (EFB). For example, gateway 110 may transfer a flight plan from external application 200 to first LRU 191 in components 190, and gateway 110 may transfer LRU data from first LRU 191 in components 190 to external application 200. Gateway 110 may enable high integrity data transfers between external application 200 and components 190.

Components 190 may include first LRU 191, second LRU 192, and component broadcaster 195. Component broadcaster 195 may be an LRU broadcaster. Components 190 may be equipment such as control, monitoring, communication, navigation, weather, and anti-collision systems, for example, for vehicle 100. First LRU 191 and second LRU 192 may be modular components of vehicle 100

Gateway 110 may include controller 300, first slot 111, second slot 112, Universal Serial Bus port 115, and external data database 119. Controller 300 may control the operations of gateway 110, and is further described below. Gateway 110 may communicate with first LRU 191, second LRU 192, and component broadcaster 195 via one or more of first slot 111, second slot 112, or Universal Serial Bus port 115.

Data adapter 120 may include input processor 130, failsafe validation engine 140, and output processor 150. As shown in FIG. 1, data may be transferred between external application 200 and gateway 110 of vehicle 100 in a bidirectional manner, and data may be transferred between gateway 110 and components 190 in a bidirectional manner.

Input processor 130 may include interface handler 131, data decoder 132, and file handler 133. Interface handler 131 may coordinate communication between data adapter 120 and external application 200. For example, interface handler 131 may coordinate a transmission of a flight plan in a .sfp format from external application 200. Data decoder 132 may format data for processing between input processor 130 and failsafe validation engine 140. For example, data decoder 132 may format the data received by input processor 130 in the .sfp format from external application 200 into an .xml file for processing by failsafe validation engine 140. File handler 133 may store one or more input files from external application 200 for processing.

Failsafe validation engine 140 includes rules engine 141, schematic parser 142, and context analyzer 143. Rules engine 141 receives updated rules from context analyzer 143. Based on the updated rules, rules engine 141 processes input data. Upon successful processing, the processed data is sent to schematic parser 142. Upon unsuccessful processing, rules engine 141 may send an error message in a notification. Schematic parser 142 receives processed data from rules engine 141 upon successful processing by rules engine 141. Schematic parser 142 processes and parses the data based on one or more schematics defined for components 190. Upon successful processing, schematic parser 142 may send the parsed data to output processor 150. Upon unsuccessful processing, schematic parser 142 may send an error message in a notification. Context analyzer 143 may receive mission data from component broadcaster 195, and may receive external context data from external data database 119. Context analyzer 143 may process the mission data and external context data, and send updated rules to rules engine 141 based on the processed mission data and external context data.

Output processor 150 may include common object model 151 and data encoder 152. Common object model 151 may store one or more object models for communicating with components 190. Data encoder 152 may encode, using an object model in common object model 151, data in output processor 150 into a suitable format for components 190. The encoded data may be sent from data encoder 152 using interface handler 131, for example.

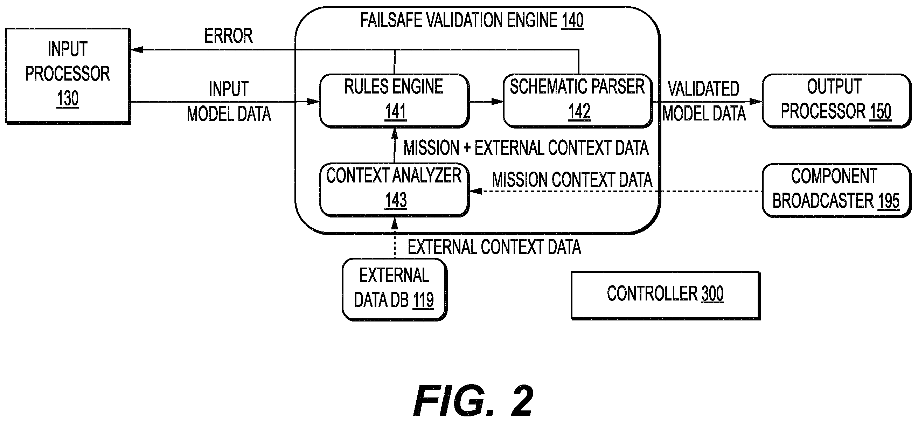

As shown in FIG. 2, failsafe validation engine 140 includes rules engine 141, schematic parser 142, and context analyzer 143.

Rules engine 141 receives updated rules from context analyzer 143. Based on the updated rules, rules engine 141 processes input model data received from input processor 130. Upon successful processing, the processed data is sent to schematic parser 142. Upon unsuccessful processing, rules engine 141 may send an error message in a notification.

Schematic parser 142 receives the processed data from rules engine 141 upon successful processing by the rule engine. Schematic parser 142 processes and parses the data based on one or more schematics defined for components 190. Upon successful processing, schematic parser 142 may send the parsed data to output processor 150 to encode the parsed data to send to components 190, such as to first LRU 191 and/or second LRU 192. Upon unsuccessful processing, schematic parser 142 may send an error message in a notification.

Context analyzer 143 may receive mission data and external context data from component broadcaster 195 and external data database 119, respectively. Context analyzer 143 may process the mission data and external context data, and send updated rules to rules engine 141 based on the processed mission data and external context data.

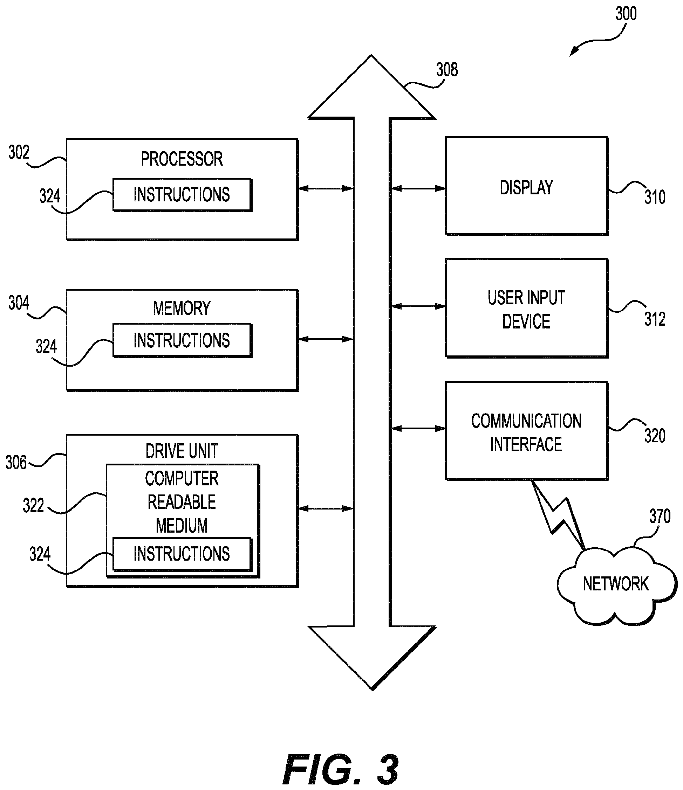

FIG. 3 depicts an implementation of a controller 300 that may execute techniques presented herein, according to one or more embodiments.

The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As illustrated in FIG. 3, the controller 300 may include a processor 302, e.g., a central processing unit (CPU), a graphics processing unit (GPU), or both. The processor 302 may be a component in a variety of systems. For example, the processor 302 may be part of a standard computer. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, microcode and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile rewritable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

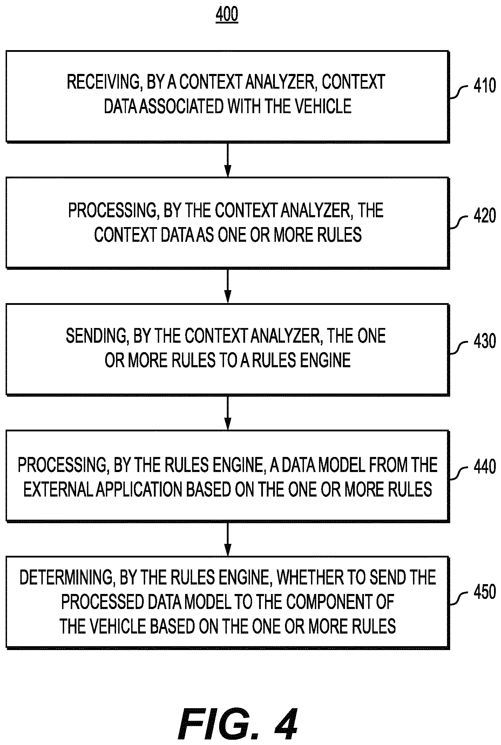

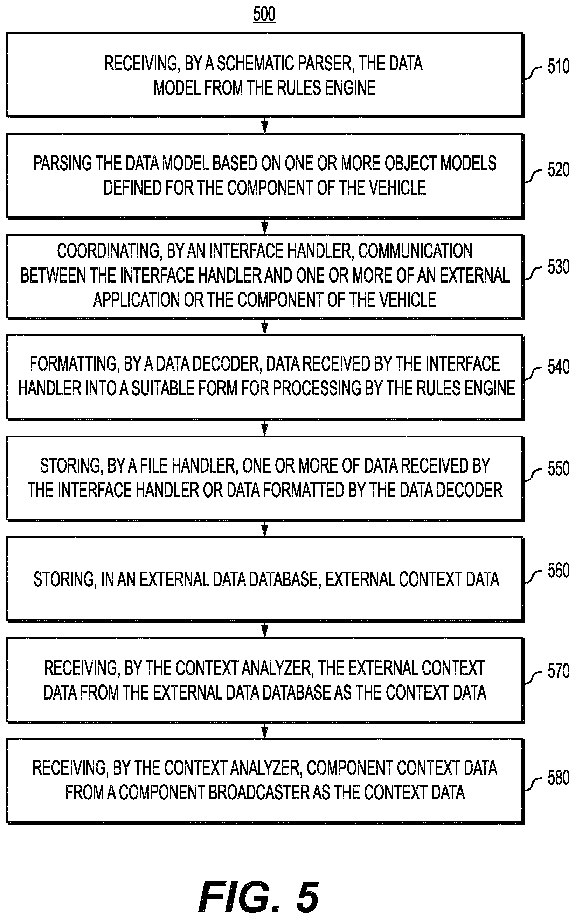

FIGS. 4-5 depict a flowchart of a method 400 implemented by controller 300 to filter a data transfer between an external application 200 and components 190 of a vehicle 100. Method 400 includes receiving, by a context analyzer 143, context data associated with the vehicle 100 (operation 410). The context data may be received from external data database 119 or component broadcaster 195. The context data is a flight phase of an aircraft, such as a climbing phase of a flight of the aircraft. Method 400 inlcudes processing, by the context analyzer 143, the context data to configure one or more rules (operation 420). For example, the external context data may provide the flight information region the aircraft is flying. Based on the prescribed speed limits of the flight information region, a rule may be configured that the maximum speed should not exceed 0.8 mach. This rule may then be used when any speed recommendation is provided by an Electronic Flight Bag. Method 400 includes sending, by the context analyzer 143, the one or more rules to a rules engine 141 (operation 430). Method 400 includes processing, by the rules engine 141, a data model from the external application 200 based on the one or more rules (operation 440). For example, the data model may include a takeoff performance message including takeoff speeds such as V1, V2, and VR, for example. Method 400 may include determining, by the rules engine 141, whether to send the processed data model to the components 190 of the vehicle 100 based on the one or more rules (operation 450). For example, the rules engine 141 may determine the takeoff performance message is out of context of the climbing phase of the flight. The applicable rule in this case may be that the takeoff performance data can only be sent from an external device in a pre-flight phase. When the current aircraft flight phase is cruise, the rule will reject the request to accept the takeoff performance message.

Method 400 includes additional operations, represented here as method 500. Method 500 includes, based on determining to send the processed data model to the components 190 of the vehicle 100, receiving, by a schematic parser 142, the data model from the rules engine 141 (operation 510), and parsing the data model based on one or more object models defined for the components 190 of the vehicle 100 (operation 520). For example, the data model may include data such as a landing performance message with "Approach speed: 134 / Flap1 speed: 185 / Flap 2 speed: 154" and the parsed data may include data such as "EFBID 185 154 134".

Method 500 may include coordinating, by an interface handler 131, communication between the interface handler 131 and one or more of an external application 200 or the components 190 of the vehicle 100 (operation 530). For example, interface handler 131 may coordinate a transmission of a flight plan in a .sfp format from external application 200. Method 500 may include formatting, by a data decoder 132, data received by the interface handler 131 into a suitable form for processing by the rules engine 141 (operation 540). For example, data decoder 132 may format the data received by input processor 130 in the .sfp format from external application 200 into an .xml file for processing by failsafe validation engine 140. Method 500 may include storing, by a file handler 133, one or more of data received by the interface handler 131 or data formatted by the data decoder 132 (operation 550). Method 500 may include storing, in an external data database 119, external context data (operation 560). For example, the external context data may include current geographical region, flight information region, current weather and traffic conditions, and traffic controller tuning information. Method 500 may include receiving, by the context analyzer 143, the external context data from the external data database 119 as the context data (operation 570). Method 500 may include receiving, by the context analyzer 143, component context data from a component broadcaster 195 as the context data (operation 580).

The vehicle 100 is an aircraft, the controller 300 may be provided in the aircraft, the components 190 may be one or more avionics components, the external application 200 is an Electronic Flight Bag, the context data is a flight phase of the aircraft, and the data model includes new data and a request from the Electronic Flight Bag to update the avionics component with the new data.

Other embodiments of the disclosure will be apparent to those skilled in the art from consideration of the specification and practice of the invention disclosed herein. It is intended that the specification and examples be considered as exemplary only, with the scope of the invention being indicated by the following claims.

## Claims

1. A system to filter a data transfer between an external application and a component of a vehicle, wherein the vehicle is an aircraft, the system is provided in the aircraft, the component is an avionics component, the external application is an Electronic Flight Bag, the system comprising:
a failsafe validation engine, wherein the failsafe validation engine is configured to act as a filter mechanism to eliminate unintended or inconsequential data uploads from the external application to the avionics component, and includes:
a rules engine to process a data model from the external application based on one or more rules, wherein the rules engine is configured to determine whether to send the processed data model to the component of the vehicle based on the one or more rules,
a context analyzer to receive context data associated with the vehicle, process the context data to configure the one or more rules, and send the one or more rules to the rules engine, and
a schematic parser to receive the data model from the rules engine and parse the data model based on one or more schematics defined for the avionics component, wherein the context data is a flight phase of the aircraft, and the data model includes new data and a request from the Electronic Flight Bag to update the avionics component with the new data; and
a controller to control the failsafe validation engine.

2. The system of claim 1, further comprising an output processor, wherein the output processor includes:
a common object model to store the one or more schematics, and
a data encoder to receive the parsed data model from the failsafe validation engine, and encode, using the one or more schematics stored in the common object model, the parsed data into a suitable format for the component of the vehicle.

3. The system of claim 2, further comprising an input processor, wherein the input processor includes:
an interface handler to coordinate communication between the system and one or more of an external application or the component of the vehicle,
a data decoder to format data received by the interface handler into a suitable form for processing by the failsafe validation engine, and
a file handler to store one or more of data received by the interface handler or data formatted by the data decoder.

4. The system of claim 3, further comprising:
an external data database to store external context data.

5. The system of claim 4, wherein the context analyzer is configured to receive the external context data from the external data database as the context data.

6. The system of claim 1, further comprising:
one or more of a slot or a Universal Serial Bus port, wherein the one or more of the slot or the Universal Serial Bus port is configured to communicate with the component of the vehicle.

7. The system of claim 6, wherein the context analyzer is configured to receive component context data from a component broadcaster as the context data.

8. A controller-implemented method to filter a data transfer between an external application and a component of a vehicle, wherein the vehicle is an aircraft, the controller is provided in the aircraft, the component is an avionics component, the external application is an Electronic Flight Bag, the method comprising:
receiving, by a context analyzer, context data associated with the vehicle;
processing, by the context analyzer, the context data to configure one or more rules;
sending, by the context analyzer, the one or more rules to a rules engine;
processing, by the rules engine, a data model from the external application based on the one or more rules; and
determining, by the rules engine, whether to send the processed data model to the component of the vehicle based on the one or more rules, wherein the context data is a flight phase of the aircraft, and the data model includes new data and a request from the Electronic Flight Bag to update the avionics component with the new data; and based on determining to send the processed data model to the component of the vehicle:
receiving, by a schematic parser, the data model from the rules engine; and
parsing the data model based on one or more schematics defined for the avionics component.

9. The method of claim 8, further comprising:
coordinating, by an interface handler, communication between the interface handler and one or more of an external application or the component of the vehicle;
formatting, by a data decoder, data received by the interface handler into a suitable form for processing by the rules engine; and
storing, by a file handler, one or more of data received by the interface handler or data formatted by the data decoder.

10. The method of claim 9, further comprising:
storing, in an external data database, external context data.

11. The method of claim 10, further comprising:
receiving, by the context analyzer, the external context data from the external data database as the context data.

## Patentansprüche

1. System zum Filtern eines Datentransfers zwischen einer externen Anwendung und einer Komponente eines Fahrzeugs, wobei das Fahrzeug ein Flugzeug ist, das System in dem Flugzeug bereitgestellt ist, die Komponente eine Avionikkomponente ist, die externe Anwendung ein elektronischer Pilotenkoffer ist, das System umfassend:
eine ausfallsichere Validierungs-Engine, wobei die ausfallsichere Validierungs-Engine dazu konfiguriert ist, als ein Filtermechanismus zu fungieren, um unbeabsichtigte oder unerhebliche Daten-Uploads aus der externen Anwendung in die Avionikkomponente zu beseitigen, und Folgendes beinhaltet:
eine Regel-Engine, um ein Datenmodell von der externen Anwendung auf Basis einer oder mehrerer Regeln zu verarbeiten, wobei die Regel-Engine dazu konfiguriert ist, auf Basis der einen oder der mehreren Regeln zu bestimmen, ob das verarbeitete Datenmodell an die Komponenten des Fahrzeugs gesendet werden soll,
einen Kontext-Analysator, um Kontextdaten, die dem Fahrzeug zugehörig sind, zu empfangen, die Kontextdaten zu verarbeiten, um die eine oder die mehreren Regeln zu konfigurieren und die eine oder die mehreren Regeln an die Regel-Engine zu senden, und
einen schematischen Parser, um das Datenmodell von der Regel-Engine zu empfangen und das Datenmodell auf Basis einer oder mehrerer Schaltbilder, die für die Avionikkomponente definiert sind, zu parsen, wobei die Kontextdaten eine Flugphase des Flugzeugs sind, und das Datenmodell neue Daten und eine Anfrage von dem elektronischen Pilotenkoffer, die Avionikkomponente mit den neuen Daten zu aktualisieren, beinhaltet; und
eine Steuerung, um die ausfallsichere Validierungs-Engine zu steuern.

2. System nach Anspruch 1, ferner umfassend einen Ausgabeprozessor, wobei der Ausgabeprozessor Folgendes beinhaltet:
ein gemeinsames Objektmodell, um das eine oder die mehreren Schaltbilder zu speichern, und
einen Datenkodierer, um das geparste Datenmodell von der ausfallsicheren Validierungs-Engine zu empfangen und unter Verwendung des einen oder der mehreren in dem gemeinsamen Objektmodell gespeicherten Schaltbilder die geparsten Daten in ein geeignetes Format für die Komponente des Fahrzeugs zu kodieren.

3. System nach Anspruch 2, ferner umfassend einen Eingabeprozessor, wobei der Eingabeprozessor Folgendes beinhaltet:
einen Schnittstellen-Handler, um eine Kommunikation zwischen dem System und einem oder mehreren aus einer externen Anwendung oder der Komponente des Fahrzeugs zu koordinieren,
einen Datendekodierer, um durch den Schnittstellen-Handler empfangene Daten in eine geeignete Form zum Verarbeiten durch die ausfallsichere Validierungs-Engine zu formatieren, und
einen Datei-Handler, um ein oder mehrere von dem Schnittstellen-Handler empfangene Daten oder von dem Datendekodierer formatierte Daten zu speichern.

4. System nach Anspruch 3, ferner umfassend:
eine Datenbank für externe Daten, um externe Kontextdaten zu speichern.

5. System nach Anspruch 4, wobei der Kontext-Analysator dazu konfiguriert ist, die externen Kontextdaten von der Datenbank für externe Daten als die Kontextdaten zu empfangen.

6. System nach Anspruch 1, ferner umfassend:
einen oder mehrere aus einem Steckplatz oder einem Universellen Seriellen Bus-Anschluss, wobei der eine oder die mehreren aus dem Steckplatz oder dem Universellen Seriellen Bus-Anschluss dazu konfiguriert sind, mit der Komponente des Fahrzeugs zu kommunizieren.

7. System nach Anspruch 6, wobei der Kontext-Analysator dazu konfiguriert ist, Komponenten-Kontextdaten von einem Komponenten-Broadcaster als die Kontextdaten zu empfangen.

8. Steuerungsimplementiertes Verfahren zum Filtern eines Datentransfers zwischen einer externen Anwendung und einer Komponente eines Fahrzeugs, wobei das Fahrzeug ein Flugzeug ist, die Steuerung in dem Flugzeug bereitgestellt ist, die Komponente eine Avionikkomponente ist, die externe Anwendung ein elektronischer Pilotenkoffer ist, das Verfahren umfassend:
Empfangen, durch einen Kontext-Analysator, von Kontextdaten, die dem Fahrzeug zugehörig sind;
Verarbeiten, durch den Kontext-Analysator, der Kontextdaten, um eine oder mehrere Regeln zu konfigurieren;
Senden, durch den Kontext-Analysator, der einen oder der mehreren Regeln an eine Regel-Engine;
Verarbeiten, durch die Regel-Engine, eines Datenmodells von der externen Anwendung auf Basis der einen oder der mehreren Regeln; und
Bestimmen, durch die Regel-Engine, ob das verarbeitete Datenmodell an die Komponente des Fahrzeugs gesendet werden soll, auf Basis der einen oder der mehreren Regeln, wobei die Kontextdaten eine Flugphase des Flugzeugs sind und das Datenmodell neue Daten und eine Anfrage von dem elektronischen Pilotenkoffer, die Avionikkomponente mit den neuen Daten zu aktualisieren, beinhaltet; und auf Basis des Bestimmens, dass das verarbeitete Datenmodell an die Komponente des Fahrzeugs gesendet werden soll:
Empfangen, durch einen schematischen Parser, des Datenmodells von der Regel-Engine; und
Parsen des Datenmodells auf Basis eines oder mehrerer Schaltbilder, die für die Avionikkomponente definiert sind.

9. Verfahren nach Anspruch 8, ferner umfassend:
Koordinieren, durch einen Schnittstellen-Handler, einer Kommunikation zwischen dem Schnittstellen-Handler und einem oder mehreren aus einer externen Anwendung oder der Komponente des Fahrzeugs;
Formatieren, durch einen Datendekodierer, von durch den Schnittstellen-Handler empfangenen Daten in eine geeignete Form zum Verarbeiten durch die Regel-Engine; und
Speichern, durch einen Datei-Handler, eines oder mehrerer von dem Schnittstellen-Handler empfangenen Daten oder durch den Datendekodierer formatierten Daten.

10. Verfahren nach Anspruch 9, ferner umfassend:
Speichern, in einer Datenbank für externe Daten, von externen Kontextdaten.

11. Verfahren nach Anspruch 10, ferner umfassend:
Empfangen, durch den Kontext-Analysator, der externen Kontextdaten von der Datenbank für externe Daten als die Kontextdaten.

## Revendications

1. Système pour filtrer un transfert de données entre une application externe et un composant d'un véhicule, dans lequel le véhicule est un aéronef, le système est prévu dans l'aéronef, le composant est un composant avionique, l'application externe est une sacoche de vol électronique, le système comprenant :
un moteur de validation à sécurité intégrée, dans lequel le moteur de validation à sécurité intégrée est configuré pour agir comme un mécanisme de filtrage pour éliminer les téléchargements de données involontaires ou sans importance de l'application externe vers le composant avionique, et inclut :
un moteur de règles pour traiter un modèle de données provenant de l'application externe sur la base d'une ou plusieurs règles, dans lequel le moteur de règles est configuré pour déterminer s'il faut envoyer le modèle de données traité au composant du véhicule sur la base des une ou plusieurs règles,
un analyseur de contexte pour recevoir les données de contexte associées au véhicule, traiter les données de contexte pour configurer les une ou plusieurs règles et envoyer les une ou plusieurs règles au moteur de règles, et
un analyseur syntaxique par schémas pour recevoir le modèle de données du moteur de règles et analyser le modèle de données sur la base d'un ou plusieurs schémas définis pour le composant avionique, dans lequel les données de contexte sont une phase de vol de l'aéronef, et le modèle de données inclut de nouvelles données et une demande provenant de la sacoche de vol électronique pour mettre à jour le composant avionique avec les nouvelles données ; et
un contrôleur pour contrôler le moteur de validation à sécurité intégrée.

2. Système selon la revendication 1, comprenant en outre un processeur de sortie, dans lequel le processeur de sortie inclut :
un modèle d'objet commun pour stocker les un ou plusieurs schémas, et
un codeur de données pour recevoir le modèle de données analysé provenant du moteur de validation à sécurité intégrée et coder, à l'aide des un ou plusieurs schémas stockés dans le modèle d'objet commun, les données analysées dans un format approprié pour le composant du véhicule.

3. Système selon la revendication 2, comprenant en outre un processeur d'entrée, dans lequel le processeur d'entrée inclut :
un gestionnaire d'interface pour coordonner la communication entre le système et un ou plusieurs d'une application externe ou du composant du véhicule,
un décodeur de données pour formater les données reçues par le gestionnaire d'interface dans une forme appropriée pour le traitement par le moteur de validation à sécurité intégrée, et
un gestionnaire de fichiers pour stocker une ou plusieurs des données reçues par le gestionnaire d'interface ou des données formatées par le décodeur de données.

4. Système selon la revendication 3, comprenant en outre :
une base de données de données externes pour stocker des données de contexte externes.

5. Système selon la revendication 4, dans lequel l'analyseur de contexte est configuré pour recevoir les données de contexte externes de la base de données de données externes en tant que données de contexte.

6. Système selon la revendication 1, comprenant en outre :
un ou plusieurs d'une fente ou d'un port de bus série universel, dans lequel les un ou plusieurs de la fente ou du port de bus série universel sont configurés pour communiquer avec le composant du véhicule.

7. Système selon la revendication 6, dans lequel l'analyseur de contexte est configuré pour recevoir des données de contexte de composant provenant d'un diffuseur de composant en tant que données de contexte.

8. Procédé mis en œuvre par contrôleur pour filtrer un transfert de données entre une application externe et un composant d'un véhicule, dans lequel le véhicule est un aéronef, le contrôleur est prévu dans l'aéronef, le composant est un composant avionique, l'application externe est une sacoche de vol électronique, le procédé comprenant :
la réception, par l'analyseur de contexte, de données de contexte associées au véhicule ;
le traitement, par l'analyseur de contexte, des données de contexte pour configurer une ou plusieurs règles ;
l'envoi, par l'analyseur de contexte, des une ou plusieurs règles à un moteur de règles ;
le traitement, par le moteur de règles, d'un modèle de données provenant de l'application externe sur la base des une ou plusieurs règles ; et
la détermination, par le moteur de règles, s'il faut envoyer le modèle de données traité au composant du véhicule sur la base des une ou plusieurs règles, dans lequel les données de contexte sont une phase de vol de l'aéronef, et le modèle de données inclut de nouvelles données et une demande provenant de la sacoche de vol électronique pour mettre à jour le composant avionique avec les nouvelles données ; et sur la base de la détermination de l'envoi du modèle de données traité au composant du véhicule :
la réception, par un analyseur syntaxique par schémas, du modèle de données provenant du moteur de règles ; et
l'analyse syntaxique du modèle de données sur la base d'un ou plusieurs schémas définis pour le composant avionique.

9. Procédé selon la revendication 8, comprenant en outre :
la coordination, par un gestionnaire d'interface, de la communication entre le gestionnaire d'interface et un ou plusieurs d'une application externe ou du composant du véhicule ;
le formatage, par un décodeur de données, de données reçues par le gestionnaire d'interface dans une forme appropriée pour le traitement par le moteur de règles ; et
le stockage, par un gestionnaire de fichiers, d'une ou plusieurs des données reçues par le gestionnaire d'interface ou des données formatées par le décodeur de données.

10. Procédé selon la revendication 9, comprenant en outre :
le stockage, dans une base de données de données externes, de données de contexte externes.

11. Procédé de la revendication 10, comprenant en outre :
la réception, par l'analyseur de contexte, des données de contexte externes provenant de la base de données de données externes en tant que données de contexte.
